Europäisches Patentamt

European Patent Office

Office européen des brevets

(11) Veröffentlichungsnummer: **0 123 919**
**B2**

# (12) NEUE EUROPÄISCHE PATENTSCHRIFT

(45) Veröffentlichungstag der neuen Patentschrift:
**14.03.90**

(51) Int. Cl.$^5$: **C 22 C 1/04,** C 22 C 18/00,
H 01 M 4/42, B 22 F 9/08

(21) Anmeldenummer: **84103479.6**

(22) Anmeldetag: **29.03.84**

(54) Verfahren zur Herstellung von Zinkpulver für alkalische Batterien (V).

(30) Priorität: **31.03.83 DE 3311920**

(43) Veröffentlichungstag der Anmeldung:
**07.11.84 Patentblatt 84/45**

(45) Bekanntmachung des Hinweises auf die
Patenterteilung:
**24.06.87 Patenblatt 87/26**

(45) Bekanntmachung des Hinweises auf die
Entscheidung über den Einspruch:
**14.03.90 Patentblatt 90/11**

(84) Benannte Vertragsstaaten:
**AT BE CH DE FR GB IT LI LU NL SE**

(56) Entgegenhaltungen:
**EP-A-0 089 608**
**BE-A- 415 145**
**DE-B-1 293 963**
**FR-A-2 511 395**
**JP-A-5 084 840**

(73) Patentinhaber: **Grillo-Werke AG**
**Weseler Strasse 1**
**D-4100 Duisburg-Hamborn (DE)**

(72) Erfinder: **Glaeser, Wolfgang, Dr.**
**Siebenlinden 7**
**D-3380 Goslar 1 (DE)**

(74) Vertreter: **Werner, Hans-Karsten, Dr. et al**
**Deichmannhaus am Hauptbahnhof**
**D-5000 Köln 1 (DE)**

Courier Press, Leamington Spa, England.

EP 0 123 919 B2

**Beschreibung**

Gegenstand der vorliegenden Erfindung ist ein Verfahren zur Herstellung von Zinkpulver für alkalische Batterien mit geringer Gasentwicklung im alkalischen Elektrolyten durch Legieren des Zinks mit anderen Metallen. Für den Einsatz in alkalischen Batterien ist Zinkpulver nur dann geeignet, wenn es ausreichend wenig Wasserstoff/Gasentwicklung im Electrolyten auch ohne Stromabgabe zeigt. Zu diesem Zweck wird Zinkpulver im allgemeinen mit Hilfe von Quecksilber passiviert. Diese Passivierung kann entweder als sog. nachträgliche Amalgamierung nach der Pulverherstellung erfolgen oder aber auch gemäss DE—OS 24 41 356 durch Pulverisierung von Zink-Amalgamen.

Die Verwendung von Quecksilber bedingt jedoch erhebliche Aufwendungen für den Arbeitsschutz und den Umweltschutz. Während der Herstellung und Handhabung des Zink-Quecksilber-Pulvers bis zum Einsatz in die Batterien sind ständige Umweltschutz- und Arbeitsuchutz-massnahmen notwendig, da das Quecksilber aus dem Zinkpulver verdampft. Die relativ grosse Oberfläche des Zinkpulvers bewirkt sogar eine sehr schnelle Erreichung des Quecksilber-Sättigungsdampfdruckes oberhalb des Zinkpulvers.

Die vorliegende Erfindung hat sich die Aufgabe gestellt, die Nachteile der bisher verwendeten Zinkpulver für alkalische Batterien mit einem relativ hohen Quecksilbergehalt von 0,1 bis 10 Gew.-% zu vermeiden und dennoch ein Zinkpulver zu erhalten, welches eine ausreichend niedrige Gasentwicklung bei der Verwendung in alkalischen Batterien aufweist.

Es war zwar bekannt, dass Legierungszusätze von Blei die Gasentwicklung von Zinkpulver herabsetzen, jedoch nicht in so ausreichendem Masse, dass derartige mit Blei legierte Zinkpulver für alkalische Batterien geeignet waren. Eigene Unterschungen hatten ferner gezeigt, dass man mit Quicksilber legiertes Zinkpulver unter bestimmten Umständen durch Zusatz von weiteren Legierungselementen aus der Reihe Gold, Silber, Zinn, Blei, Cadmium, Indium, Thallium, Gallium und Zink in seinen Eigenschaften noch etwas verbessern kann, jedoch war hierfür stets notwendige Voraussetzung, dass neben Zink die wichtigste Legierungskomponente Quecksilber war.

Die FR—A—2 511 395 beschreibt Zinklegierungen zur Herstellung von alkalischen Batterien. Eine geringere Gesentwicklung wird durch die Verwendung einer Legierung aus Zink mit Blei, Cadmium, Gallium und Indium erreicht.

Auf Seite 6, Zeilen 23 bis 25, wird zwar erwähnt, dass Indium auch durch Bismuth und Thallium ersetzt werden kann; damit schliesst man aber die Verwendung von Thallium neben Indium aus.

Die DE—B—1 293 963 beschreibt ein Verfahren zur Herstellung von Becherelektroden für galvanische Elemente, indem man Tabletten oder Ronden aus Zinkpulver presst und aus diesen durch Schlagpressen Becher formt.

Die EP—A—0 089 608 beschreibt ein Verfahren zur Grandulierung von Zink-Quecksilberlegierungen.

Es wurde jetzt überraschenderweise gefunden, dass man auch ohne Zusatz von Quecksilber Zinkpulver für alkalische Batterien mit geringer Gasentwicklung im alkalischen Elektrolyten herstellen kann, wenn man das Zink mit 10 ppm bis 5 Gew.-% Blei und 2 ppm bis 5 Gew.-% Cadmium, 10 ppm bis 5. Gew.-% Thallium und 2 ppm bis 5 Gew.-% Indium legiert, wobei die Gesamtmenge an zugesetzten Metallen nicht mehr als 10 Gew.-% beträgt und die so erhaltene geschmolzene Legierung mit einem Gemisch aus Gas und Wasser verdüst, wobei die Wassermenge so bemessen ist, dass sie aufgrund des Wärmeinhaltes der Pulverteilchen restlos verdampft.

Es tritt hierbei offensichtlich ein nicht vorhersehbarer synergistischer Effekt auf, durch den die Gasentwicklung so weit reduziert wird, dass die so erhaltenden Zinkpulver ohne weiteres für alkalische Batterien eingesetzt werden können.

Die Mengen an Blei liegen zwischen 10 ppm und 5 Gew.-%, vorzugsweise zwischen 100 ppm und 0.9 Gew.-%. Die Mengen an Cadmium liegen zwischen 2 ppm und 5 Gew.-% , vorzugsweise zwischen 20 ppm und 1 Gew.-%. Die Mengen an Thallium liegen zwischen 10 ppm bis 5 Gew.-%, vorzugsweise zwischen 20 ppm und 0,5 Gew.-%. Die Mengen an Indium betragen 2 ppm bis 5 Gew.-%, vorzugsweise 100 ppm bis 1 Gew.-%. Die Gesamtmenge an zugesetzten Metallen beträgt nicht mehr als 10 Gew.-%, vorzugsweise nicht mehr als 5 Gew.%.

Zur Durchführung des erfindungsgemässen Verfahrens wird Zink mit den obengenannten Metallen in üblicher Weise legiert und die so erhaltene geschmolzene Legierung mit einem Gemisch aus Gas und Wasser verdüst, wobei die Wassermenge so bemessen ist, dass sie aufgrund des Wärmeinhalts der Pulverteilchen restlos verdampft.

Das erfindungsgemässe Verfahren wird in dem nachfolgenden Beispiel näher erläutert. Die verwendete Legierung wurde in an sich bekannter Weise durch Zugabe der jeweiligen Legierungselemente in Mettallform zu flüssigem Zink und anschliessendem Homogenisieren hergestellt. Sie wurde durch Verdüsung aus einer Gasdüse zerstäubt. Dem Verdüsungsprozessgas wurde so viel Wasser zugegeben, dass dieses gerade vollständig verdampfen konnte. Das erhaltene Produkt wurde gesiebt und die jeweilige Fraktion mit einer Kornverteilung zwischen 125 bis 500 µm untersucht.

Die Gasentwicklung wurde in einem alkalischen Elektrolyten gemessen, der durch Auflösen von 400 g KOH und 40 g ZnO und Auffüllen auf 1000 ml mit Wasser hergestellt wurde. Es wurde die Gasentwicklung bei 50°C über 100 Stunden gemessen.

Reines Zinkpulver entwickelt unter diesen Bedingungen durchschnittlich 1 bis 2 µl Gas pro Stunde pro g.

Reines Zinkpulver, legiert mit 6% Quecksilber, entwickelt unter diesen Bedinungen durchschnitt-lich 0,08 µl/h/g.

Reines Zinkpulver, legiert mit 0,1 Gew.-% Blei, entwickelt unter diesen Umständen druchschnitt-lich, 0,29 µl Gas pro Stunde pro g.

Beispiel

Reines Zink wurde mit 2,7 Gew.-% Blei, 30 ppm Thallium, 5 ppm Cadmium und 130 ppm Indium legiert und, wie oben beschrieben, zu Zinkpulver verarbeitet. Die Gasentwicklung betrug durchschnittlich 0,07 µl Gas pro Stunde pro g.

**Patentanspruch**

Verfahren zur Herstellung von Zinkpulver für alkalische Batterien mit geringer Gasentwicklung im alkalischen Elektrolyten durch Legieren des Zinks mit anderen Metallen, dadurch gekennzeichnet, dass man das Zink mit 10 ppm bis 5 Gew.-% Blei und 2 ppm bis 5 Gew.-% Cadmium, 10 ppm bis 5 Gew.-% Thallium und 2 ppm bis 5 Gew.-% Indium legiert, wobei die Gesamtmenge an zugesetzten Metallen nicht mehr als 10 Gew.-% beträgt und die so erhaltene geschmolzene Legeirung mit einem Gemisch aus Gas und Wasser verdüst, wobei die Wassermenge so bemessen ist, dass die aufgrund des Wärmeinhaltes der Pulverteilchen restlos verdampft.

**Revendication**

Procédé d'obtention de poudres de zinc pour batteries alcalines, ayant un faible dégagement de gaz dans l'électrolyte alcalin, par alliage du zinc avec d'autres métaux, caractérisé en ce qu'on allie le zinc avec 10 ppm à 5% en poids de plomb et 2 ppm à 5% en poids de cadmium, 10 ppm à 5% en poids de thallium et 2 ppm à 5% en poids d'indium, la quantité totale de métaux ajoutés n'étant pas supérieure à 10% en poids, et on atomise l'alliage fondu avec un mélange de gaz et d'eau, la quantité de'au étant calculée de façon telle qu'elle s'évapore complètement sous l'effet de la chaleur latente des particules de poudre.

**Claim**

A process for producing zinc powder for alkaline batteries having low gas evolution in the alkaline electrolyte by alloying zinc with other metals, characterized in that the zinc is alloyed with from 10 ppm to 5% by weight of lead and 2 ppm to 5% by weight of cadmium, 10 ppm to 5% by weight of thallium and 2 ppm by 5% by weight of indium, the total amount of the added metals being not more than 10% by weight, and the molten alloy is atomized with a mixture comprising gas and water, the amount of water having been metered so that it is evaporated without remainder due to the heat content of the powder particles.